# EUROPEAN PATENT APPLICATION

(11) **EP 3 903 602 A1**
(43) Date of publication of application: **03.11.2021**
(21) Application number: 18945303.8
(22) Date of filing: 28.12.2018
(51) Int. Cl.: A23L 2/52, A23F 3/00, A23F 5/00, C12G 3/00

(54) **BEVERAGE**

(71) Applicant: Suntory Holdings Limited, Osaka 530-8203 (JP)
(72) Inventor: TAN, Shoen, Nagaokakyo-shi, Kyoto (JP)
(74) Representative: Vossius & Partner Patentanwälte Rechtsanwälte mbB
(86) International application number: PCT/JP2018/048433
(87) International publication number: WO 2020/136860

(57) **Abstract**

A beer-taste beverage, containing a carbon dioxide-extracting product of a plant raw material containing coriander seeds. The present invention provides a beer-taste beverage which is capable of favorably providing a flavor of coriander seeds and a method for producing the same, which can provide a new taste as luxury products.

## Description

### TECHNICAL FIELD

The present invention relates to a beverage and a method for producing the same.

### BACKGROUND ART

Xanthohumols and isoxanthohumols are prenylflavonoids originated from hops, which have been known to have various physiological activities such as inhibition of cancer cell growth, anti-oxidation actions, inhibitory actions for bone decomposition, and antibacterial actions. Recently, the xanthohumols have been found to have inhibitory actions for accumulation of fats in animal tests (Non-Patent Publications 1 and 2), and the xanthohumols have also been remarked as ingredients which serve to maintain or improve physical health, such as to inhibit the accumulation of fats, thereby preventing or improving obesity. In addition, with the expectations of maintenance of physical health and improved effects thereof by the actions of physiological activities owned by the xanthohumols, it has been tried to increase the content of the ingredient in the various beverages (Patent Publication 1).

Patent Publication 1: Japanese Patent Gazette No. 6029390

Non-Patent Publication 1: Phytochemistry. 91 Jul. 2013 236
Non-Patent Publication 2: Arch Biochem Biophys. 599 Jun. 2016 22

### SUMMARY OF THE INVENTION

### PROBLEMS TO BE SOLVED BY THE INVENTION

However, in Patent Publication 1, a xanthohumol is used as an inclusion complex with cyclodextrin, the amount of the xanthohumol included based on the amount of the cyclodextrin is very low, so that it is needed to contain cyclodextrin in a large amount in order to increase the ingredient content of the xanthohumol in a beverage. As a result, it is assumed to lead to the lowering of taste and the increase in saccharide ingestion, so that the beverage is not suitable as a beverage to be ingested daily for the purpose of preventing or improving obesity.

An object of the present invention is to provide a beverage containing a prenylflavonoid such as a xanthohumol or an isoxanthohumol at a high concentration, while inhibiting the prenylflavonoid from being aggregated or precipitated, and a method for producing the same.

### MEANS TO SOLVE THE PROBLEMS

The present invention relates to:
[1] A beverage containing a prenylflavonoid, a hydrophilic emulsifying agent, and a lipophilic emulsifying agent, wherein a content of the prenylflavonoid is from 6 to 500 ppm.
[2] A method for producing a beverage, including mixing a prenylflavonoid, a hydrophilic emulsifying agent, and a lipophilic emulsifying agent.

### EFFECTS OF THE INVENTION

According to the present invention, a beverage containing a prenylflavonoid at a high concentration while inhibiting the prenylflavonoid from being aggregated or precipitated, and a method for producing the same can be provided.

### MODES FOR CARRYING OUT THE INVENTION

As a result of intensive studies in view of the above object, the inventors of the present invention have found out that a content of a prenylflavonoid in a beverage can be increased by using in a combination of a hydrophilic emulsifying agent and a lipophilic emulsifying agent, while inhibiting the prenylflavonoid from being aggregated or precipitated. The present invention has been perfected thereby. The mechanisms therefor are assumed as follows. A prenylflavonoid which is sparingly water soluble is coated with a lipophilic emulsifying agent having a relatively closer polarity, and a surrounding thereof is coated with a hydrophilic emulsifying agent to make the prenylflavonoid into fine emulsions, whereby forming a structure in which re-crystallization of the prenylflavonoids themselves is less likely to take place.

The beverage of the present invention contains a prenylflavonoid, a hydrophilic emulsifying agent, and a lipophilic emulsifying agent.

The prenylflavonoid in the present invention is a flavonoid to which a prenyl group is added, and the flavonoid is a collective name for flavones, flavanols, isoflavones, flavans, flavanols, flavanones, flavanonols, chalcones, and anthocyanidins. The prenylflavonoid of chalcones includes xanthohumols, the prenylflavonoid of flavans includes isoxanthohumols, and the prenylflavonoid of flavanones includes 8-prenylnaringenin, and the like. The prenylflavonoid may be, for example, extracted from a raw material containing a prenylflavonoid such as hops, or a commercially available product can be used. The commercially available product includes, for example, Xantho-Flav pure (manufactured by Hopsteiner, containing 85% xanthohumol and 4% isoxanthohumol in terms of the prenylflavonoid), and the like. In addition, when a specified prenylflavonoid is contained, the prenylflavonoid may be contained by alteration of another prenylflavonoid. For example, a part of the xanthohumol may be contained by thermal alteration to isoxanthohumol.

The content of the prenylflavonoid in the beverage of the present invention is 6 ppm or more, preferably 10 ppm or more, more preferably 16 ppm or more, and even more preferably 24 ppm or more, from the viewpoint of expecting to more effectively exhibit the actions of physiological activities owned by the prenylflavonoid. Also, the higher the content of the prenylflavonoid, the exhibition of the actions of physiological activities owned by the prenylflavonoid can be expected. However, in the beverage of the present invention, the content is 500 ppm or less, and preferably 450 ppm or less, from the viewpoint of maintaining the flavor inherently owned by the beverage, and the content may be within any of these combinations mentioned above.

The emulsifying agent in the present invention is not particularly limited so long as the emulsifying agent can be used in beverages. The emulsifying agent includes glycerol fatty acid esters, sucrose fatty acid esters, propylene glycol fatty acid esters, phospholipids, sorbitan fatty acid esters, and the like. Among them, the glycerol fatty acid esters, the sucrose fatty acid esters, and the phospholipids are preferred, and the glycerol fatty acid esters and the sucrose fatty acid esters are more preferred, and the glycerol fatty acid esters are even more preferred, from the viewpoint of not inhibiting the flavor of the beverages.

The balance between hydrophilicity and lipophilicity of the emulsifying agent in the present invention is expressed by HLB (Hydrophile-Lipophile Balance), and the hydrophilic emulsifying agent preferably has an HLB of 10 or more, and the lipophilic emulsifying agent preferably has an HLB of 5 or less. The HLB can be calculated by Griffin method.

The glycerol fatty acid ester used in the present invention is an ester obtained from a reaction of glycerol with a fatty acid, and preferably a polyglycerol fatty acid ester. When the specific examples of the polyglycerol, which is a constituent of the polyglycerol fatty acid ester, are shown, the polyglycerol includes, for example, diglycerol, triglycerol, tetraglycerol, pentaglycerol, hexaglycerol, heptaglycerol, octaglycerol, nonaglycerol, decaglycerol, eicosaglycerol, and the like, but not limited thereto. In addition, the constituting fatty acid of the polyglycerol fatty acid ester may be, but not particularly limited to, a linear or branched, saturated or unsaturated fatty acid. In addition, the kinds of the constituting fatty acid may, but not particularly limited to, contain one or more fatty acids in one polyglycerol fatty acid ester. Specifically, saturated fatty acids include butyric acid, valeric acid, caproic acid, caprylic acid, capric acid, lauric acid, myristic acid, palmitic acid, stearic acid, nonadecanoic acid, arachidic acid, behenic acid, lignoceric acid, and isomers thereof, and the like. The unsaturated fatty acids include palmitoleic acid, oleic acid, elaidic acid, gadoleic acid, erucic acid, nervonic acid, linoleic acid, eicosadienic acid, docosadienoic acid, linolenic acid, stearidonic acid, arachidonic acid, eicosapentaenoic acid, docosahexaenoic acid, undecylenic acid, and isomers, condensates, isomers of the condensates thereof, and the like.

When the polyglycerol fatty acid ester is contained as a hydrophilic emulsifying agent, the polyglycerol fatty acid ester includes preferably a polyglycerol fatty acid ester having an average degree of polymerization of glycerol of from 4 to 20, of which fatty acid moiety is a saturated or unsaturated fatty acid having from 8 to 18 carbon atoms, and the like, and more specifically includes decaglycerol monomyristate, decaglycerol monolaurate, tetraglycerol monolaurate, and the like.

When the glycerol fatty acid ester is contained as a lipophilic emulsifying agent, the glycerol fatty acid ester includes preferably polyglycerol fatty acid esters having an average degree of polymerization of glycerol of from 2 to 10, the fatty acid of which is a saturated or unsaturated fatty acid having from 12 to 22 carbon atoms, and the like, and includes more specifically tetraglycerol pentaoleate, decaglycerol octaerucate, polyglycerol condensed ricinoleate, and the like.

The sucrose fatty acid ester used in the present invention is an esterified product of sucrose and a fatty acid. When a sucrose fatty acid ester is contained as a hydrophilic emulsifying agent, the fatty acid having from 8 to 18 carbon atoms is preferred, and the sucrose fatty acid ester includes specifically sucrose palmitate esters, sucrose myristate esters, sucrose laurate esters, and the like. When a sucrose fatty acid ester is contained as a lipophilic emulsifying agent, the fatty acid having from 12 to 22 carbon atoms is preferred, and the sucrose fatty acid ester includes specifically sucrose stearate esters, and the like.

The phospholipid used in the present invention refers to a collective name of compounds composed of a glycerol backbone, a fatty acid residue and a phosphate group, to which a basic compound and a sugar are bound thereto, and generally those originated from soybeans and rapeseeds, or those originated from chicken eggs can be utilized. When a phospholipid is contained as a hydrophilic emulsifying agent, the phospholipid includes hydrogenated lecithins in which a soybean lecithin or an egg yolk lecithin is hydrogenated, and lysolecithins which are enzymatically degraded, and the like. When a phospholipid is contained as a lipophilic emulsifying agent, the phospholipid includes soybean lecithin, egg yolk lecithin, and the like.

The sorbitan fatty acid ester used in the present invention refers to an esterified product of sorbitan and a fatty acid, which includes preferably polyoxyethylene sorbitan fatty acid esters. When a polyoxyethylene sorbitan fatty acid ester is contained as a hydrophilic emulsifying agent, the fatty acid having from 8 to 18 carbon atoms is preferred, and the polyoxyethylene sorbitan fatty acid ester includes specifically polyoxyethylene sorbitan monolaurate, polyoxyethylene sorbitan monooleate, polyoxyethylene sorbitan monostearate, and the like. The content of the sorbitan fatty acid ester as the hydrophilic emulsifying agent and/or the lipophilic emulsifying agent, based on 100 parts by mass of a total content of the hydrophilic emulsifying agent and the lipophilic emulsifying agent, is preferably 60 parts by mass or less, and more preferably 50 parts by mass or less, from the viewpoint of inhibiting bitterness and astringency. The lower limit can be, but not particularly limited to, 0 parts by mass or more, 1 part by mass or more, 5 parts by mass or more, and 10 parts by mass or more, and the like, and the content may be within the range of any of the combinations given above.

The mass ratio of the content of the hydrophilic emulsifying agent to the content of the lipophilic emulsifying agent (hydrophilic emulsifying agent / lipophilic emulsifying agent) in the beverage of the present invention is preferably 1 or more, from the viewpoint of maintaining the dispersibility in the beverage, and the mass ratio is preferably 100 or less, more preferably 50 or less, and even more preferably 30 or less, from the viewpoint of forming emulsions of the prenylflavonoid. The mass ratio may be within the range of any of the combinations given above.

A total content of the hydrophilic emulsifying agent and the lipophilic emulsifying agent in the beverage of the present invention is preferably 6 ppm or more, more preferably 30 ppm or more, and even more preferably 60 ppm or more, from the viewpoint of high contents of the prenylflavonoid, and the total content is preferably 25,000 ppm or less, more preferably 6,000 ppm or less, and even more preferably 5,000 ppm or less, from the viewpoint of suppressing the calories originated from the emulsifying agents. Here, the hydrophilic emulsifying agent and the lipophilic emulsifying agent may be contained alone or in two or more kinds, and the content may be within the range of any of the combinations given above.

The mass ratio of the total content of the emulsifying agents to the content of the prenylflavonoid in the beverage of the present invention (emulsifying agents / prenylflavonoid) is 0.01 or more, preferably 1 or more, more preferably 5 or more, and even more preferably 10 or more, from the viewpoint of forming emulsions of the prenylflavonoid, and the mass ratio is preferably 100 or less, and more preferably 50 or less, from the viewpoint of inhibiting uncomfortable taste originated from the emulsifying agents, and the mass ratio may be within the range of any of the combinations given above.

As the emulsifying agent, an emulsifying agent other than the hydrophilic emulsifying agent and the lipophilic emulsifying agent (emulsifying agents having an HLB of exceeding 5 and less than 10) may be used. In order to form an emulsion of the prenylflavonoid, a lipophilic emulsifying agent coating the prenylflavonoid and further a hydrophilic emulsifying agent coating an outermost layer of the emulsion may be contained in the lowest possible amount, and the ratio of a total content of the hydrophilic emulsifying agent and the lipophilic emulsifying agent to a total content of all the emulsifying agents used ((hydrophilic emulsifying agent + lipophilic emulsifying agent) / all the emulsifying agents) is preferably 0.1 or more, more preferably 0.2 or more, and even more preferably 0.5 or more. The upper limit is not particularly limited, which can be set at 1 or less, 0.9 or less, 0.8 or less, or the like, and the mass ratio may be within the range of any of combinations given above.

Since the beverage of the present invention has low amounts of emulsifying agents used while containing a prenylflavonoid in a high concentration, the beverage can be suitably prepared as beverages such as beer-taste beverages, chuhai-taste beverages, tea beverages, fruit juice beverages, coffee beverages, and sports beverages. In addition, the beverage of the present invention can optionally contain a sweetener, an acidulant, a bittering agent, dietary fibers, a polysaccharide thickener, an antioxidant, or the like.

The beverage of the present invention can be produced in the same manner as in known methods for production in various beverages, except that the beverage is obtained through the step of mixing a prenylflavonoid, a hydrophilic emulsifying agent, and a lipophilic emulsifying agent. In the mixing step, the mixing may be carried out in the beverage, or a mixture containing a prenylflavonoid, a hydrophilic emulsifying agent, and a lipophilic agent (hereinafter referred to as "a prenylflavonoid mixture") may be separately prepared, and added to the beverage. It is preferable that the mixing step is carried out under the conditions of from 100° to 200°C. In the mixing step, a prenylflavonoid, a hydrophilic emulsifying agent, and a lipophilic emulsifying agent may be concurrently added and mixed, or a prenylflavonoid and a lipophilic emulsifying agent may be previously mixed, and the mixture is mixed with a hydrophilic emulsifying agent. Alternatively, a prenylflavonoid and a hydrophilic emulsifying agent may be previously mixed, and the mixture is mixed with a lipophilic emulsifying agent. An embodiment where a prenylflavonoid mixture is previously prepared, and the mixture is added to a beer-taste beverage will be exemplified hereinbelow.

The method for producing a beer-taste beverage according to the present invention includes a method including adding a prenylflavonoid mixture. Here, the beer-taste beverage may be a beer-taste beverage containing an alcohol, or a nonalcoholic beer-taste beverage, each of which can be produced by a known production method except that a prenylflavonoid mixture is added. The methods of production in each of the cases will be exemplified hereinbelow, without intending to limit the present invention to these embodiments.

One embodiment of the beer-taste beverage according to the present invention includes a beer-taste beverage containing an alcohol, which can be produced in the same manner as in general beer-taste beverages, except that a prenylflavonoid mixture is added during the production steps for a beer-taste beverage. In addition, the alcohol as used herein refers to ethanol, and the ethanol content, in terms of a volume ratio, is, but not particularly limited to, preferably from 1% to 10%. Further, the origin of the alcohol component contained in the beer-taste beverage is not limited to fermentation and non-fermentation. A general production process for a beer-taste beverage will be shown hereinbelow. A general beer-taste beverage is one in which malts are used or not used as raw materials, which can be produced in the following manner.

As to the beer-taste beverage containing an alcohol produced using malts as raw materials, first, to a mixture containing raw materials such as wheat such as malts, optionally other grains, starches, sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and the mixture may be boiled. The hops may be mixed at any stage from the beginning of boiling to before the termination of boiling. As the conditions in the saccharification step, the boiling step, the solid content removal step, and the like, known conditions may be used. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. In each of the above steps, the prenylflavonoid mixture may be added in any steps up to filling.

As to the beer-taste beverage containing an alcohol produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to a hot water added with an extract using raw materials other than malts, and a mixture may be boiled. The hops may be mixed at any stage from the beginning of boiling to before the termination of boiling. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. In each of the above steps, the prenylflavonoid mixture may be added in any steps up to filling.

As to the beer-taste beverage which is non-fermented and contains an alcohol, the beer-taste beverage may be one in which an alcohol content of a final manufactured product is adjusted by adding an alcohol for raw materials and the like, irrespective of malts being used or unused. The alcohol for raw materials may be added in any steps from the saccharification step to the filling step. In each of the above steps, the prenylflavonoid mixture may be added in any steps up to filling.

One embodiment of the beer-taste beverage according to the present invention includes nonalcoholic beer-taste beverages, which can be produced in the same manner as general nonalcoholic beer-taste beverages except that a prenylflavonoid mixture is added during the production steps of the beer-taste beverage. The general production steps for a non-fermented nonalcoholic beer-taste beverage will be shown as follows. A nonalcoholic beer-taste beverage such as a nonalcoholic beer can be easily produced by a method not having a fermentation step with an yeast. General non-fermented nonalcoholic beer-taste beverages are ones produced using malts as raw materials or ones without using them, and each can be produced as follows.

As to the nonalcoholic beer-taste beverage produced by using malts as raw materials, first, to a mixture containing raw materials such as wheat such as malts, optionally other grains, starches, and sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and a mixture may be boiled. The hops may be mixed at any stage from the beginning of boiling to before the termination of boiling. As the conditions in the saccharification step, the boiling step, the solid content removal step, and the like, known conditions may be used. After boiling, the wort obtained is filtered, and a carbon dioxide gas is added to a filtrate obtained. Thereafter, a vessel is filled, and subjected to a sterilizing step, to obtain an intended nonalcoholic beer-taste beverage. In each of the above steps, the prenylflavonoid mixture may be added in any steps up to filling.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a vessel is filled, and subjected to a sterilizing step, to obtain an intended nonalcoholic beer-taste beverage. In each of the above steps, the prenylflavonoid mixture may be added in any steps up to filling.

The term "beer-taste beverage" as used herein refers to a carbonated beverage having a beer-like flavor. In other words, the beer-taste beverage of the present specification embraces all the carbonated beverages having a beer flavor, unless specified otherwise. Among them, the term "nonalcoholic beer-taste beverage" refers to a beer-taste beverage having an alcoholicity of less than 1%, and preferably does not substantially contain an alcohol. The beverage of the embodiment that substantially does not contain an alcohol does not intend to exclude a beverage containing a very small amount of alcohol to an extent that is undetectable. A beverage of which alcoholicity would be rounded off to 0.0%, and especially a beverage of which alcoholicity is rounded off to 0.00%, is embraced in the nonalcoholic beer-taste beverage. The kinds of the beer-taste beverage of the present invention include, for example, nonalcoholic beer-taste beverages, beer-taste refreshing beverages, and the like. Here, the term "alcoholicity (alcohol content)" as used herein means the content of ethanol, but an aliphatic alcohol is not included therein.

The alcoholicity of the beer-taste beverage according to the present invention means a content (v/v%) of an alcoholic content of the beverage, and the alcoholicity can be measured by any of known methods. For example, the alcoholicity can be measured with an oscillating densitometer. Specifically, a sample in which a carbon dioxide gas is degassed from a beverage by filtration or ultrasonication is prepared, and the sample is distilled with direct flame, and a density of the distillated solution obtained is measured at 15°C, and the alcoholicity can be converted and obtained from "Table 2 Alcoholic Content and Density (15°C) and Specific Gravity (15/15°C) Conversion Table" which is an annex to Internal Revenue Bureau, Specified Analysis Method (2007 Internal Revenue Bureau Order No. 6, revised June 22, 2007). In a case of a low concentration with an alcoholicity of less than 1.0%, a commercially available alcohol measurement instrument or gas chromatography may be used.

An aliphatic alcohol may be added to the beer-taste beverage according to the present invention, from the viewpoint of giving a liquor-taste. The aliphatic alcohol is not particularly limited so long as it is a known one, and an aliphatic alcohol having 4 to 5 carbon atoms is preferred. In the present invention, preferred aliphatic alcohols include aliphatic alcohols having 4 carbon atoms such as 2-methyl-1-propanol and 1-butanol; and aliphatic alcohols having 5 carbon atoms such as 3-methyl-1-butanol, 1-pentanol, and 2-pentanol. These aliphatic alcohols can be used alone or in a combination of two or more kinds. The content of the aliphatic alcohol having 4 to 5 carbon atoms is preferably from 0.0002 to 0.0007% by mass, and more preferably from 0.0003 to 0.0006% by mass. In the present specification, the content of the aliphatic alcohol can be measured by using a headspace gas chromatography.

### (Calories)

Among the beer-taste beverages according to the present invention, it is desired that the nonalcoholic beer-taste beverage is low in calories, matching in the favor of low-calorie diets in the recent years. Therefore, the beer-taste beverage according to the present invention has the number of calories of preferably less than 20 kcal/100 mL, and more preferably less than 5 kcal/100 mL.

The number of calories included in the beer-taste beverage according to the present invention is basically calculated in accordance with "Method and the like for Analyzing Nutrient Ingredients etc. in Nutritional Labelling Standards" published in association with the Health Promotion Act. In other words, in principle, the number of calories can be calculated as a total sum of the amount of the various nutrient ingredients quantified multiplied by an energy conversion coefficient of each component (protein: 4 kcal/g, fat: 9 kcal/g, saccharide: 4 kcal/g, dietary fibers: 2 kcal/g, alcohol: 7 kcal/g, or organic acid: 3 kcal/g). For details, see "Method and the like for Analyzing Nutrient Ingredients etc. in Nutritional Labelling Standards."

Specific measurement methods for the amounts of each of nutrient ingredients contained in the beer-taste beverage according to the present invention may be carried out in accordance with various methods of analyses described in the Health Promotion Act, "Method and the like for Analyzing Nutrient Ingredients etc. in Nutritional Labelling Standards." Alternatively, if requested to Incorporated Foundation, Japan Food Research Laboratories, one can know the calories and/or each of amounts of nutrient ingredients.

### (Saccharides)

The saccharides contained in the beer-taste beverage according to the present invention refer to saccharides based on the Nutritional Labelling Standards for Foods (2003 Ministry of Health, Labour, and Welfare, Announcement No. 176). Specifically, the saccharides refer to a group of foods from which proteins, fats, dietary fibers, ashes, alcohols, and water are excluded. In addition, the amount of saccharides in the foods is calculated by deduction of the amounts of proteins, fats, dietary fibers, ashes, and water from the weight of the above foods. In this case, the amounts of proteins, fats, dietary fibers, ashes, and water are measured by a method set out in the Nutrition Labelling Standards. Specifically, the amount of proteins is measured by nitrogen quantification conversion method; the amount of fats is measured by an ether extraction method, a chloroform-methanol liquid mixture extraction method, a Gerber method, an acid decomposition method or a Roese-Gottlieb method; the amount of dietary fibers is measured by high-performance liquid chromatography or Prosky method; the amount of ashes is measured by a method of ashing with magnesium acetate, a direct ashing method, or a method of ashing with sulfuric acid; and the amount of water is measured by Karl-Fischer method, a method using a drying aid, a vacuum thermal drying method, an atmospheric thermal drying method, or a plastic film method.

It is desired that the beer-taste beverage according to the present invention is low in saccharides, matching in the favor of the low carbohydrate diet in the recent year. Therefore, the content of the saccharide of the beer-taste beverage according to the present invention is preferably less than 2.5 g/100 mL, and more preferably 0.5 g/100 mL or less. In addition, the lower limit of the content is not particularly set.

### (Acidulant)

As the acidulant used in the beer-taste beverage according to the present invention, it is preferable to use one or more acids selected from the group consisting of citric acid, lactic acid, phosphoric acid, and malic acid. In addition, in the present invention, as an acid other than the above acids, succinic acid, tartaric acid, fumaric acid, glacial acetic acid or the like can be used. These acidulants can be used without limitations so long as the acidulants are accepted to be added to foods. In the present invention, it is preferable to use a combination of lactic acid from the viewpoint of appropriately giving a moderate sour taste, and phosphoric acid from the viewpoint of appropriately giving an sour taste with a slightly stimulating taste.

The content of the acidulant in the beer-taste beverage according to the present invention, calculated in terms of citric acid, is preferably 200 ppm or more, more preferably 550 ppm or more, and even more preferably 700 ppm or more, from the viewpoint of providing a beer-taste feel, and the content is preferably 15000 ppm or less, more preferably 5500 ppm or less, and even more preferably 2000 ppm or less, from the viewpoint of acidity. Therefore, in the present invention, the content of the acidulant, calculated in terms of citric acid, includes preferred ranges such as from 200 ppm to 15000 ppm, preferably from 550 ppm to 5500 ppm, and more preferably from 700 ppm to 1500 ppm. Here, the amount calculated in terms of citric acid as used herein refers to an amount converted from an acidity of each of the acidulants on the basis of the acidity of citric acid. For example, the amount which is equivalent to 100 ppm of lactic acid, calculated in terms of citric acid, is 120 ppm, the amount which is equivalent to 100 ppm of phosphoric acid, calculated in terms of citric acid, is 200 ppm, and the amount which is equivalent to 100 ppm of malic acid, calculated in terms of citric acid, is 125 ppm.

The content of the acidulant in the beer-taste beverage refers to those calculated by analyzing with high-performance liquid chromatography (HPLC) or the like.

### (Hops)

In the beer-taste beverage according to the present invention, hops can be used as a part of the raw materials. Since the flavor tends to resemble beer, it is desired that hops are used in a part of the raw materials. When hops are used, usual pellet hops, powder hops or a hop extract used in the production of beer and the like can be appropriately selected and used in accordance with a desired flavor. In addition, hop processed products such as isomerized hops and reduced hops may be used. The hops used in the beer-taste beverage according to the present invention embrace those products. Also, the amount of the hops is, but not particularly limited to, typically from 0.0001 to 1% by weight or so, based on the entire amount of the beverage.

### (Other Raw Materials)

In the beer-taste beverage according to present invention, other raw materials may be optionally used within the range that would not inhibit the effects of the present invention. For example, a sweetener (including a high-intensity sweetener), a bittering agent, a flavor (aromatic), an yeast extract, a colorant such as a caramel pigment, vegetable extracted saponin-based material such as soybean saponin or quillai saponin, a vegetable protein such as maize or soybeans, and a peptide-containing product, a proteinaceous material such as bovine serum albumin, dietary fibers, a seasoning such as amino acids, or an antioxidant such as ascorbic acid can optionally be used within the range that would not inhibit the effects of the present invention.

Thus, a beer-taste beverage according to the present invention is obtained. The pH of the beer-taste beverage according to the present invention is from 3.0 to 5.0, preferably from 3.0 to 4.5, and more preferably 3.0 to 4.0, from the viewpoint of making the flavor of the beverage favorable.

### (Container-Packed Beverage)

The beer-taste beverage according to the present invention can be packed into a container. The shapes of the containers are not limited in any manners, and the beer-taste beverage can be packed into a tightly sealed container such as a glass bottle, a can, a barrel, or a plastic bottle, whereby a beverage contained in a container can be provided.

### EXAMPLES

The present invention will be specifically described hereinbelow by the Examples, without intending to limit the scope of the present invention to the following Examples.

### < Preparation of Prenylflavonoid Mixtures >

### Levels 1-1 to 1-8

A hydrophilic emulsifying agent as listed in Table 1 was heated to 200°C, a xanthohumol in an amount as listed in Table 1 was added thereto, and the mixture was mixed so that the entire mixture would be homogeneous. Further, a lipophilic emulsifying agent as listed in Table 1 was added thereto, and the mixture was mixed so that the entire mixture would be homogeneous. Thereafter, the mixture was air-cooled to 80°C, 4.8 g of pure water was further added thereto, and the mixture was mixed so that the entire mixture would be homogeneous.

### [Table 1]

**Table 1**

| | | | Level No. | | | | | | | |
|---|---|---|---|---|---|---|---|---|---|---|
| | | HLB | 1-1 | 1-2 | 1-3 | 1-4 | 1-5 | 1-6 | 1-7 | 1-8 |
| Polyoxyethylene sorbitan fatty acid ester, g | Polyoxyethylene sorbitan monolaurate (constituting fatty acid: lauric acid) | 16.7 | 2.35 | | | | | | | |
| Sucrose fatty acid ester, g | Sucrose palmitate ester (constituting fatty acid: palmitic acid) | ca. 16 | | 2.35 | | | | | | |
| Glycerol fatty acid ester, g | Decaglycerol monomyristate (constituting fatty acid: myristic acid) | 15.7 | | | 2.35 | | | 4.23 | 4.23 | 4.23 |
| | Decaglycerol monolaurate (constituting fatty acid: lauric acid) | 14.7 | | | | 2.35 | | | | |
| | Tetraglycerol monolaurate (constituting fatty acid: lauric acid) | 10.4 | | | | | 2.35 | | | |
| | Tetraglycerol pentaoleate (constituting fatty acid: oleic acid) | 2.9 | | | | | | 0.47 | | |
| | Decaglycerol octaerucate (constituting fatty acid: erucic acid) | 3.7 | | | | | | | 0.47 | |
| | Polyglycerol condensed ricinoleate (constituting fatty acid: ricinoleic acid) | <5 | 2.35 | 2.35 | 2.35 | 2.35 | 2.35 | | | |
| Phospholipid, g | Soybean lecithin | <5 | | | | | | | | 0.47 |
| 85% Xanthohumol, 4% isoxanthohumol, g | | | 0.47 | | | | | | | |
| Pure water, g | | | 4.80 | | | | | | | |
| Total, g | | | 10.0 | 10.0 | 10.0 | 10.0 | 10.0 | 10.0 | 10:0 | 10.0 |

### Levels 2-1 to 2-9

The same procedures as in Levels 1-1 to 1-8 were carried out except that only one of either a hydrophilic emulsifying agent or a lipophilic emulsifying agent as listed in Table 2 was used to prepare the prenylflavonoid mixtures.

### [Table 2]

**Table 2**

| | | | Level No. | | | | | | | | |
|---|---|---|---|---|---|---|---|---|---|---|---|
| | | HLB | 2-1 | 2-2 | 2-3 | 2-4 | 2-5 | 2-6 | 2-7 | 2-8 | 2-9 |
| Sucrose fatty acid ester, g | Sucrose palmitate ester (constituting fatty acid: palmitic acid) | ca. 16 | 5.00 | | | | | | | | |
| Glycerol fatty acid ester, g | Decaglycerol monomyristate (constituting fatty acid: myristic acid) | 15.7 | | 5.00 | | 2.35 | | | | | |
| | Decaglycerol monolaurate (constituting fatty acid: lauric acid) | 14.7 | | | 5.00 | 2.35 | | | | | |
| | Tetraglycerol monolaurate (constituting fatty acid: lauric acid) | 10.4 | | | | | 5.00 | | | | |
| | Tetraglycerol pentaoleate (constituting fatty acid: oleic acid) | 2.9 | | | | | | 5.00 | | | 2.35 |
| | Decaglycerol octaerucate (constituting fatty acid: erucic acid) | 3.7 | | | | | | | 5.00 | | |
| | Polyglycerol condensed ricinoleate (constituting fatty acid: ricinoleic acid) | <5 | | | | | | | | 5.00 | 2.35 |
| 85% Xanthohumol, 4% isoxanthohumol, g | | | 0.2 | 0.2 | 0.2 | 0.47 | 0.2 | 0.2 | 0.2 | 0.2 | 0.47 |
| Pure water, g | | | 4.8 | | | | | | | | |
| Total, g | | | 10.0 | 10.0 | 10.0 | 10.0 | 10.0 | 10.0 | 10.0 | 10.0 | 10.0 |

The details of the ingredients used in Table 1 or 2 are shown hereinbelow.
Xanthohumol: Xantho-Flav pure (manufactured by Hopsteiner, containing 85% as xanthohumol, 4% as isoxanthohumol)
Decaglycerol monomyristate: (manufactured by Sakamoto Yakuhin Kogyo Co., Ltd.)
Decaglycerol monolaurate: (manufactured by Sakamoto Yakuhin Kogyo Co., Ltd.)
Tetraglycerol monolaurate: (manufactured by Sakamoto Yakuhin Kogyo Co., Ltd.)
Tetraglycerol pentaoleate: (manufactured by Sakamoto Yakuhin Kogyo Co., Ltd.)
Decaglycerol octaerucate: (manufactured by Sakamoto Yakuhin Kogyo Co., Ltd.)
Polyglycerol condensed ricinoleate: (manufactured by Sakamoto Yakuhin Kogyo Co., Ltd.)
Sucrose palmitate ester: (manufactured by MITSUBISHI-CHEMICAL
FOODS CORPORATION)
Lecithin: (manufactured by nacalai tesque)
Polyoxyethylene sorbitan monolaurate: (manufactured by nacalai tesque)

### < Preparation of Beer-Taste Beverages >

### Examples 1 to 8 and Comparative Examples 1 to 9

Twenty kilograms of malts were milled in a proper granularity, and placed in a mashed tun, and 120 L of hot water was added thereto to prepare a mash at about 50°C. After holding the mash at 50°C for 30 minutes, the temperature was gradually raised to from 65°C to 72°C in 60 minutes to carry out saccharification. The mash in which the saccharification was completed was heated to 77°C, and transferred to a wort-filtration tank and filtered, to provide a filtrate. A part of the filtrate obtained was taken, and a hot water was added thereto, and at that time the mixing proportion of the filtrate and the hot water was adjusted so that a total amount of the extract portion at the time of completion of boiling would be about 4.0% by weight. The production scale was set at 100 L, about 100 g of the hops and about 40 g of a commercially available caramel pigment (Class I) were added thereto, and the mixture was boiled at 100°C for 80 minutes. The sediment was separated from the solution after boiling, and cooled to about 2°C. A part of the cooled solution was taken, and a cold water was added in a proper amount to dilute so as to have a total amount of the extract portion in a final product of 0.3% by weight. Using lactic acid as a pH adjusting agent, the pH adjusting agent, an antioxidant, a sweetener, a flavor, and a carbon dioxide gas were each added to the diluent in proper amounts, the mixture was filtered, and the filtrate was referred to as a base beverage. A prenylflavonoid mixture prepared in Table 1 or 2 was added to the above base beverage so as to have a concentration as listed in Table 3 or 4, to give a non-fermented beer-taste beverage.

Each of the non-fermented beer-taste beverages obtained was visually confirmed for stability in homogeneity after storage at 4°C for one week. Also, the sensory evaluations for bitterness and astringency by six specialized panelists were carried out on the bases of the following evaluation criteria, and an average score of the evaluation points was calculated. At this time, in order to compare with the bitterness and astringency of xanthohumol and isoxanthohumol themselves, xanthohumol (Xantho-Flav pure, manufactured by Hopsteiner) was added to neutral spirits (ethanol 95.1%, 25°C), and the mixture was mixed so that the entire mixture became homogeneous. Thereafter, the mixture was diluted with water so that an ethanol concentration would be 1%. Comparative evaluations were made by defining the evaluation of the bitterness and astringency of a beverage containing xanthohumol in the same amount as each of Examples and Comparative Examples obtained above as 3.5. The results are shown in Table 5.

### (Evaluation of Stability in Homogeneity)

⊚: The entire mixture is homogeneous and transparent, while no aggregation or precipitations being found.
○: The entire mixture is homogeneous but not transparent, while no aggregation or precipitations being found.
×: The entire mixture is not homogeneous, showing aggregation and precipitations.

### (Evaluation of Bitterness and Astringency Originated from Emulsifying Agent)

1: Hardly tasted.
2: Faintly tasted.
3: Tasted to a certain level but an acceptable level as a beverage.
4: Distinctively tasted.
5: Strongly tasted.

### (Comprehensive Evaluations)

X: The stability is X, or the sensory evaluation is 4.5 or higher.
Δ: The stability is ○, and the sensory evaluation results are higher than 3.5 and 4.5 or lower.
○: The stability is ○, and the sensory evaluation results are 3.5 or lower.
⊚: The stability is ⊚, and the sensory evaluation results are 3.5 or lower.

| Table 3 | | Examples | | | | | | | |
|---|---|---|---|---|---|---|---|---|---|
| | | 1 | 2 | 3 | 4 | 5 6 | | 7 | 8 |
| Xanthohumol Mixture | 1-1 of Table 1, g | 3.72 | | | | | | | |
| | 1-2 of Table 1, g | | 3.72 | | | | | | |
| | 1-3 of Table 1, g | | | 3.72 | | | | | |
| | 1-4 of Table 1, g | | | | 3.72 | | | | |
| | 1-5 of Table 1, g | | | | | 3.72 | | | |
| | 1-6 of Table 1, g | | | | | | 3.72 | | |
| | 1-7 of Table 1, g | | | | | | | 3.72 | |
| | 1-8 of Table 1, g | | | | | | | | 3.72 |
| Base Beverage, mL | | 350 | | | | | | | |
| Xanthohumol Content, ppm | | 420 | | | | | | | |
| Isoxanthohumol Content, ppm | | 20 | | | | | | | |
| Hydrophilic Emulsifying Agent / Lipophilic Emulsifying Agent | | 1.0 | 1.0 | 1.0 | 1.0 | 1.0 | 9.0 | 9.0 | 9.0 |
| Total Content of Emulsifying Agents, ppm | | 4700 | | | | | | | |
| Emulsifying Agents / Prenylflavonoid | | 10.7 | | | | | | | |

**[Table 4]**

| Table 4 | | Comparative Examples | | | | | | | | |
|---|---|---|---|---|---|---|---|---|---|---|
| | | 1 | 2 | 3 | 4 5 6 7 | | | | 8 9 | |
| Xanthohumol Mixture | 2-1 of Table 2, g | 8.75 | | | | | | | | |
| | 2-2 of Table 2, g | | 8.75 | | | | | | | |
| | 2-3 of Table 2, g | | | 8.75 | | | | | | |
| | 2-4 of Table 2, g | | | | 3.72 | | | | | |
| | 2-5 of Table 2, g | | | | | 8.75 | | | | |
| | 2-6 of Table 2, g | | | | | | 8.75 | | | |
| | 2-7 of Table 2, g | | | | | | | 8.75 | | |
| | 2-8 of Table 2, g | | | | | | | | 8.75 | |
| | 2-9 of Table 2, g | | | | | | | | | 3.72 |
| Base Beverage, mL | | 350 | | | | | | | | |
| Xanthohumol Content, ppm | | 420 | | | | | | | | |
| Isoxanthohumol Content, ppm | | 20 | | | | | | | | |

**[Table 5]**

| Table 5 | Examples | | | | | | | | Comparative Examples | | | | | | | | |
|---|---|---|---|---|---|---|---|---|---|---|---|---|---|---|---|---|---|
| | 1 | 2 | 3 | 4 | 5 | 6 | 7 | 8 | 1 | 2 | 3 4 | | 5 6 | | 7 | 8 | 9 |
| Stability in Homogeneity After Storage at 4°C for One Week | ○ | ⊚ | ⊚ | ⊚ | ○ | ○ | ○ | ○ | × | × | × | × | × | × | × | × | × |
| Sensory Evaluation Results for Bitterness and Astringency | 4.0 | 2.7 | 2.5 | 2.7 | 3.1 | 3.2 | 3.1 | 3.3 | - | - | - | - | - | - | - | - | - |
| Comprehensive Evaluations | Δ | ⊚ | ⊚ | ⊚ | ○ | ○ | ○ | ○ | × | × | × | × | × | × | × | × | × |

The beverages of Examples 1 to 8 in which a hydrophilic emulsifying agent and a lipophilic emulsifying agent were used in combination were all homogeneously dispersed without aggregation or sedimentations, thereby having excellent stability. On the other hand, in all the beverages of Comparative Examples 1 to 9 in which only either one of a hydrophilic emulsifying agent or a lipophilic emulsifying agent was used, aggregations and sedimentations were observed. In addition, in Examples 2 to 8 where a sucrose fatty acid ester or a glycerol fatty acid ester was used as a hydrophilic emulsifying agent, not only uncomfortable tastes originated from the emulsifying agent were hardly tasted, but also bitterness and astringency caused by xanthohumol or isoxanthohumol were subjected to masking, thereby making them highly applicable to beverages.

### INDUSTRIAL APPLICABILITY

According to the present invention, a beverage having excellent flavor while having the actions of physiological activities owned by the xanthohumol can be provided.

## Claims

1. A beverage comprising a prenylflavonoid, a hydrophilic emulsifying agent, and a lipophilic emulsifying agent, wherein a content of the prenylflavonoid is from 6 to 500 ppm.

2. The beverage according to claim 1, wherein the prenylflavonoid is one or more members selected from the group consisting of xanthohumols and isoxanthohumols.

3. The beverage according to claim 1 or 2, wherein the HLB of the hydrophilic emulsifying agent is 10 or more.

4. The beverage according to any one of claims 1 to 3, wherein the hydrophilic emulsifying agent comprises one or more emulsifying agents selected from the group consisting of polyglycerol fatty acid esters, sucrose fatty acid esters, phospholipids, and sorbitan fatty acid esters.

5. The beverage according to any one of claims 1 to 4, wherein the HLB of the lipophilic emulsifying agent is 5 or less.

6. The beverage according to any one of claims 1 to 5, wherein the lipophilic emulsifying agent comprises one or more emulsifying agents selected from the group consisting of polyglycerol fatty acid esters, sucrose fatty acid esters, and phospholipids.

7. The beverage according to any one of claims 1 to 6, wherein a mass ratio of the content of the hydrophilic emulsifying agent to the content of the lipophilic emulsifying agent (hydrophilic emulsifying agent / lipophilic emulsifying agent) is from 1 to 100.

8. The beverage according to any one of claims 1 to 7, wherein a mass ratio of a total content of the emulsifying agents to the content of the prenylflavonoid (emulsifying agents / prenylflavonoid) is from 0.01 to 100.

9. The beverage according to any one of claims 1 to 8, which is a beer-taste beverage, a chuhai-taste beverage, a tea beverage, a fruit juice beverage, a coffee beverage, or a sport beverage.

10. A method for producing a beverage, comprising mixing a prenylflavonoid, a hydrophilic emulsifying agent, and a lipophilic emulsifying agent.
